# EUROPÄISCHE PATENTSCHRIFT

(11) **EP 2 921 339 B1**
(45) Veröffentlichungstag und Bekanntmachung des Hinweises auf die Patenterteilung: **18.04.2018**
(21) Anmeldenummer: 15151824.8
(22) Anmeldetag: 20.01.2015
(51) Int. Cl.: B60N 2/02, B60N 2/16, B60N 2/22

(54) **Betätigungsmechanismus zur Sitzverstellung und Fahrzeugsitz mit einem Betätigungsmechanismus**
Actuating mechanism for adjusting a seat and vehicle seat with an actuation mechanism
Mécanisme d'actionnement destiné au réglage de siège et siège de véhicule doté d'un mécanisme d'actionnement

(30) Priorität: 03.03.2014 DE 102014203834
(43) Veröffentlichungstag der Anmeldung: 23.09.2015
(73) Patentinhaber: Adient Luxembourg Holding S.à r.l., 1855 Luxembourg (LU)
(72) Erfinder: Kuzma, Martin, 91108 Trencin (SK); Rovný, Maros, 91305 Trencin (SK)
(74) Vertreter: Finger, Catrin

(56) Entgegenhaltungen:
- EP-A1- 1 939 032
- EP-A1- 1 942 028
- DE-A1-102009 052 709
- DE-A1-102011 085 272

## Beschreibung

Die Erfindung betrifft einen Betätigungsmechanismus zur Verstellung eines Sitzes, insbesondere eines Fahrzeugsitzes, sowie einen Fahrzeugsitz mit einem solchen Betätigungsmechanismus.
Aus dem Stand der Technik sind Sitzversteller für einen Sitz bekannt, welche eine Verstellung des Sitzes nach oben oder nach unten und somit eine Höhenverstellung und nach vorne oder nach hinten und somit eine Längsverstellung sowie eine unabhängige Neigungsverstellung einer Lehne des Sitzes ermöglichen. Hierdurch kann der Sitz individuell auf einen Sitzenden eingestellt werden. Zur Einstellung des Sitzes umfasst der Sitzversteller für jede Verstellmöglichkeit einen zugehörigen Betätigungsmechanismus.

Aus der DE 10 2011 085 272 A1 ist ein Betätigungsmechanismus mit den Merkmalen des Oberbegriffs des Anspruchs 1 bekannt. Des Weiteren ist aus der EP 1 942 028 A1 ein Fahrzeugsitz mit einer Sitzhöhenverstellung und einer Lehnenverstellung bekannt, die mittels eines Hebels betätigbar sind.

Darüber hinaus ist in der DE 10 2009 052 709 A1 ein Kraftfahrzeug mit einem Kraftfahrzeugsitz beschrieben, welcher mindestens eine Verstelleinrichtung mit mindestens einer Hebeleinrichtung zum Verstellen unterschiedlicher Segmente des Kraftfahrzeugsitzes aufweist.

Aufgabe der vorliegenden Erfindung ist es, einen gegenüber dem Stand der Technik verbesserten Betätigungsmechanismus zur Verstellung eines Sitzes anzugeben. Des Weiteren ist es Aufgabe der Erfindung einen Fahrzeugsitz mit einem solchen verbesserten Betätigungsmechanismus anzugeben.

Die Aufgabe wird hinsichtlich des Betätigungsmechanismus erfindungsgemäß durch die im Anspruch 1 angegebenen Merkmale und hinsichtlich des Fahrzeugsitzes durch die im Anspruch 15 angegebenen Merkmale gelöst.

Vorteilhafte Ausgestaltungen der Erfindung sind Gegenstand der Unteransprüche.

Ein Betätigungsmechanismus zur Verstellung eines Sitzes umfasst erfindungsgemäß einen zur Betätigung einer Sitzhöhenverstellung und einer Lehnenneigungsverstellung ausgestalteten Betätigungshebel, welcher als ein Doppelhebel zur Betätigung eines ersten Auslösemechanismus für eine Sitzhöhenverstellung und zur Betätigung eines zweiten Auslösemechanismus für eine Lehnenneigungsverstellung ausgebildet ist, wobei ein Federelement mit dem ersten Auslösemechanismus und dem zweiten Auslösemechanismus zur Erzeugung einer Federbelastung auf den ersten und zweiten Auslösemechanismus gekoppelt ist.

Der Betätigungsmechanismus mit einem integrierten Multifunktionshebel ermöglicht in vorteilhafter Weise mehrere Funktionen zur Sitzeinstellung, insbesondere zumindest eine Sitzhöhenverstellung und eine Lehnenneigungsverstellung. Zusätzlich oder alternativ kann eine Sitzlängsverstellung integriert sein. Der Betätigungsmechanismus weist eine kompakte und integrierte Bauform auf. Insbesondere weist der Betätigungsmechanismus aufgrund der Reduzierung der Bauteile und der Integration mehrerer Elemente und/oder Funktionen in ein Bauteil eine geringe Tiefe, insbesondere eine geringe Bautiefe in Axialrichtung auf. Durch die Reduzierung der Anzahl der Bauteile ist der Betätigungsmechanismus einfach zu montieren und kostengünstig herzustellen. Mittels des gemeinsamen Federelements wird eine Federbelastung auf den ersten und zweiten Auslösemechanismus erzeugt, so dass der Betätigungshebel stets im federbelastenden Eingriff mit den ersten und zweiten Auslösemechanismus ist.

Der Doppelhebel ist auf einem Übertragungselement angeordnet, welches einen der Hebel des Doppelhebels mit dem ersten Auslösemechanismus für die Sitzhöhenverstellung und den anderen Hebel des Doppelhebels mit dem zweiten Auslösemechanismus für die Lehnenneigungsverstellung, insbesondere federbelastet, koppelt oder in Eingriff bringt. Mittels einer Kopplung der beiden Hebel mit dem ersten bzw. mit dem zweiten Auslösemechanismus ist es in einfacher Weise möglich, die Auslösemechanismen mit nur einem Bauteil, dem Doppelhebel, zu betätigen.

In einer Ausgestaltung der Erfindung ist das Federelement an dem Übertragungselement angeordnet sowie zur Erzeugung einer Federbelastung auf den ersten und den zweiten Auslösemechanismus ausgebildet. Beispielsweise ist das Federelement eine Torsionsfeder.

Das gemeinsame Federelement umfasst zwei Federenden. Die Federenden sind in Radialrichtung abgewinkelt ausgebildet, so dass an den Federenden eine Befestigung oder ein Wirkzusammenhang mit dem ersten bzw. dem zweiten Auslösemechanismus herstellbar ist.

Das Federelement ist derart ausgebildet und zwischen dem ersten und dem zweiten Auslösemechanismus angeordnet, dass beide Federenden in Eingriff mit dem ersten Auslösemechanismus für die Sitzhöhenverstellung kommen und eines der Federenden in Eingriff mit dem zweiten Auslösemechanismus für die Lehnenneigungsverstellung kommt.

Hierzu ist in einer Weiterbildung ein Halteelement oder ein Adapter in Form eines Abstandshalters für das Federelement vorgesehen. Der Adapter ist zur Aufnahme des Federelements ausgebildet und an dem ersten Auslösemechanismus angeordnet. Mittels des Adapters ist die Aufnahme des Federelements sichergestellt, so dass bei einer Betätigung des ersten oder des zweiten Auslösemechanismus das Federelement lagefixiert gehalten ist.

Der Adapter ist in Axialrichtung zwischen den beiden Auslösemechanismen auf dem Übertragungselement angeordnet. Hierbei ist der Adapter als Abstandshalter ausgebildet, welcher den ersten und den zweiten Auslösemechanismus derart zueinander beabstandet, dass diese eine Relativbewegung zueinander zumindest um eine jeweilige Rotationsachse ausführen können.

Der Adapter weist in Radialrichtung zwei elastische Arme oder Rippen auf, welche sicherstellen, dass beide Federenden des gemeinsamen Federelements stets im federbelasteten Eingriff sind mit dem ersten und/oder dem zweiten Auslösemechanismus. Eine Geräuschentwicklung, beispielsweise ein metallisches Klappern, bei einem Loslassen des Betätigungshebels, wird dadurch vermieden.

Eine Ausgestaltung des Betätigungsmechanismus sieht vor, dass die zwei Hebel relativ zueinander beweglich um eine Rotationsachse eines Übertragungselements an dem Übertragungselement angeordnet sind. Somit ist eine separate Betätigung des ersten Auslösemechanismus bzw. des zweiten Auslösemechanismus auf einer gemeinsamen Rotationsachse bei gleichzeitig kompakter Bauform möglich.

Eine Weiterbildung des Betätigungsmechanismus sieht vor, dass der Hebel zur Sitzhöhenverstellung drehbar an dem Übertragungselement angeordnet ist. Eine vom Übertragungselement unabhängige Betätigung des Hebels zur Sitzhöhenverstellung ist möglich.

Gemäß einer anderen Weiterbildung des Betätigungsmechanismus ist der Hebel zur Lehnenneigungsverstellung drehfest an dem Übertragungselement angeordnet. Hierbei ergibt sich eine Abhängigkeit des Hebels zur Lehnenneigungsverstellung und dem Übertragungselement, wobei bei Betätigung des Hebels zur Lehnenneigungsverstellung das Übertragungselement betätigt wird.

In einer Weiterbildung des Betätigungsmechanismus sind der erste Auslösemechanismus und der zweite Auslösemechanismus in Axialrichtung hintereinander an dem Übertragungselement angeordnet. Das Übertragungselement, ausgebildet beispielsweise in Form einer Welle oder Übertragungsstange, ermöglicht somit eine drehbare Anordnung des ersten Auslösemechanismus und des zweiten Auslösemechanismus.

Gemäß einer Ausgestaltung des Betätigungsmechanismus sind die Federenden derart ausgebildet, dass das eine Federende zumindest in Eingriff mit dem ersten Auslösemechanismus für die Sitzhöhenverstellung kommt und das andere Federende in Eingriff mit dem zweiten Auslösemechanismus für die Lehnenneigungsverstellung kommt oder umgekehrt. Durch eine Verbindung des Federelements mit dem ersten und dem zweiten Auslösemechanismus wird somit bei einer Betätigung des ersten oder des zweiten Auslösemechanismus dasselbe Federelement gespannt. Der Betätigungsmechanismus mit nur einem Federelement weist gegenüber dem Stand der Technik eine Bauteileinsparung und eine Gewichtsreduzierung auf.

Gemäß einer anderen Ausgestaltung des Betätigungsmechanismus ist eine Anzahl von Lagerelementen vorgesehen, welche zur drehbaren Lagerung der Komponenten des Betätigungsmechanismus an dem Übertragungselement angeordnet ist. Mittels der Lagerelemente, beispielsweise Gleitlager, ist eine geräuscharme und verschleißarme Drehung der Komponenten des Betätigungsmechanismus auf dem Übertragungselement möglich.

In einer Weiterbildung des Betätigungsmechanismus ist der Anschlaghalter an dem Übertragungselement angeordnet, welcher eine Begrenzung eines Betätigungsweges des Betätigungshebels ermöglicht.

In einer anderen Weiterbildung weist der Anschlaghalter zwei radial und axial abstehende Anschläge auf, mittels welcher eine jeweilige Drehbewegung des ersten und des zweiten Auslösemechanismus begrenzt wird und somit eine mechanische Überbelastung des Federelements vermieden wird.

Ein Fahrzeugsitz, umfassend einen solchen Betätigungsmechanismus, ist in besonders einfacher Weise mittels nur einem Betätigungshebel in der Sitzhöhe und der Lehnenneigung ver- und einstellbar. Aufgrund der kompakten und integrierten Bauform des Betätigungsmechanismus ist eine Reduzierung der Bauteile des Fahrzeugsitzes realisierbar, wodurch der Betätigungsmechanismus einfach zu montieren und somit der Fahrzeugsitz kostengünstig herzustellen ist.

Ausführungsbeispiele der Erfindung werden anhand der beigefügten schematischen Figuren näher erläutert. Dabei zeigen:
- Fig. 1: schematisch in Seitenansicht einen Teil eines Sitzes mit einem Ausführungsbeispiel für einen Betätigungsmechanismus zur Sitzhöhenverstellung und Lehnenneigungsverstellung,
- Fig. 2: schematisch in Seitenansicht einen Teil des Sitzes mit abgenommener Abdeckung für den Betätigungsmechanismus und frei gezeigte innere Komponenten des Betätigungsmechanismus,
- Fig. 3: schematisch in perspektivischer Ansicht schräg von vorne einen Teil des Sitzes mit abgenommener Abdeckung für den Betätigungsmechanismus und frei gezeigte innere Komponenten des Betätigungsmechanismus,
- Fig. 4: schematisch in Explosionsdarstellung ein Ausführungsbeispiel für den Betätigungsmechanismus,
- Fig. 5: schematisch in Schnittdarstellung ein Ausführungsbeispiel für den Betätigungsmechanismus,
- Fig. 6: schematisch in Draufsicht ein Ausführungsbeispiel für den Betätigungsmechanismus im zusammengebauten Zustand mit integriertem Auslösemechanismus zur Lehnenneigungsverstellung und mit abgenommenen Auslösemechanismus zur Sitzhöhenverstellung und
- Fig. 7: schematisch in perspektivischer Ansicht ein Ausführungsbeispiel für einen integrierten Auslösemechanismus zur Sitzhöhenverstellung des Betätigungsmechanismus.

Einander entsprechende Teile sind in allen Figuren mit den gleichen Bezugszeichen versehen.

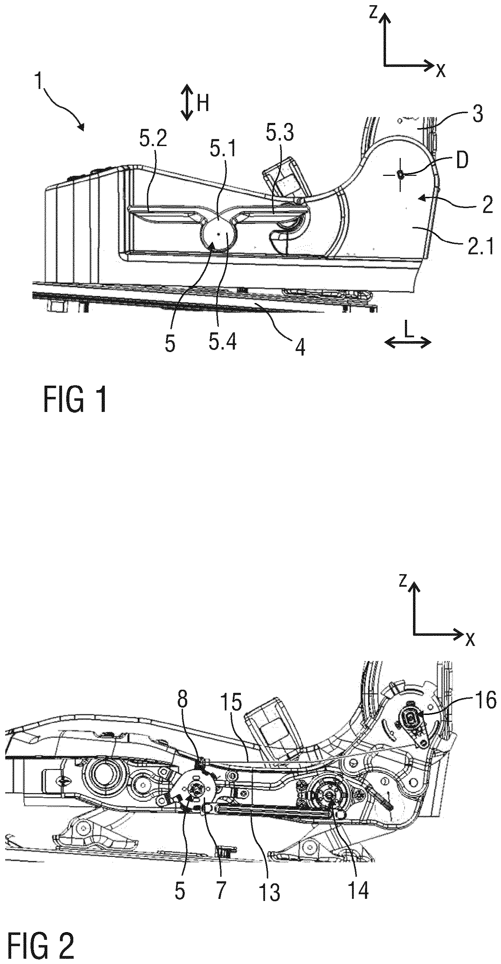

Die Figur 1 zeigt schematisch in Seitenansicht einen Sitz 1, insbesondere einen Fahrzeugsitz. Der Sitz 1 umfasst zumindest ein Sitzteil 2 und ein zum Sitzteil 2 schwenkbares, insbesondere neigungsverstellbares, Lehnenteil 3.

Zusätzlich kann der Sitz 1 mittels einer Längsführung 4, insbesondere einer Schienenführung, in Längsrichtung L nach vorne oder nach hinten ver- und einstellbar sein.

Eine Anordnung des Sitzes 1 in einem Fahrzeug wird dabei durch das nachfolgend verwendete Koordinatensystem, umfassend eine Fahrzeughochachse z, eine Fahrzeuglängsachse x und eine Fahrzeugquerachse y definiert.

Das Sitzteil 2 ist dabei mittels einer Sitzhöhenverstellung in Hochrichtung H nach oben oder nach unten ver- und einstellbar.

Das Lehnenteil 3 ist mittels einer Lehnenneigungsverstellung um eine Drehachse D in Längsrichtung L nach vorne oder nach hinten neigbar oder schwenkbar.

Zur Betätigung sowohl der Sitzhöhenverstellung als auch der Lehnenneigungsverstellung ist ein Betätigungsmechanismus 5 vorgesehen.

Der Betätigungsmechanismus 5 umfasst zumindest einen gemeinsamen Betätigungshebel 5.1 für eine Sitzhöhenverstellung und eine Lehnenneigungsverstellung. Der Betätigungshebel 5.1 ist außen am Sitz 1, insbesondere an einer der Außenseiten des Sitzes 1, im vorderen Bereich des Sitzteils 2 angeordnet.

Der gemeinsame Betätigungshebel 5.1 ist als ein Doppelhebel ausgebildet und umfasst zwei als separate Hebel 5.2, 5.3 ausgebildete Hebelenden (im Weiteren werden die Hebel als Hebelenden 5.2, 5.3 bezeichnet) - ein in Längsrichtung L gesehen vorderes Hebelende 5.2 (= vorderer Hebel) und ein hinteres Hebelende 5.3 (= hinterer Hebel). Die Hebelenden 5.2 und 5.3 sind flügelarmig ausgeformt und stehen von einem mittleren, insbesondere kreisförmigen Achssegment 5.4, als Flügelarme in entgegengesetzte Richtungen ab.

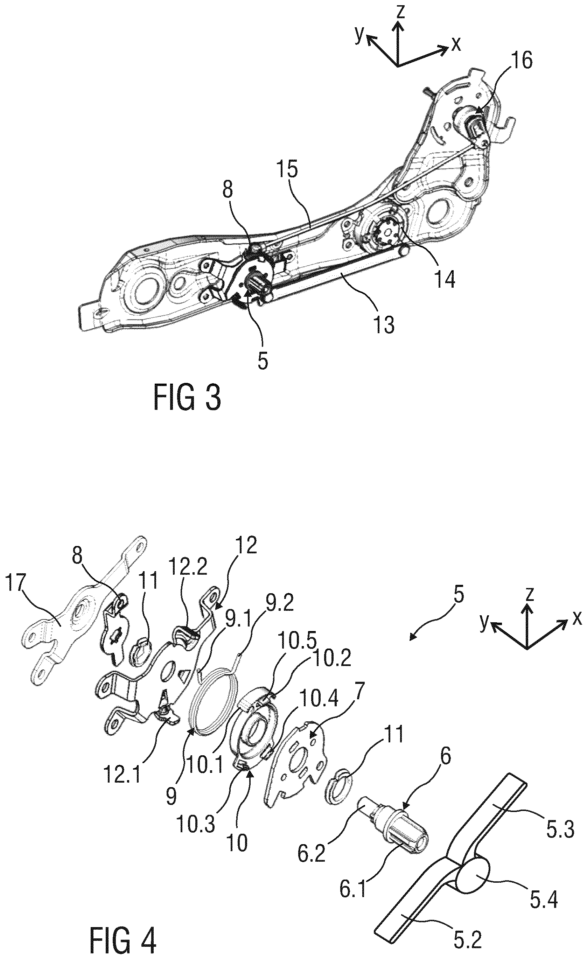

Die Hebelenden 5.2 und 5.3 sind relativ zueinander um das Achssegment 5.4 drehbar, wobei das Achssegment 5.4 an einem in den Figuren 4 bis 6 näher dargestellten Übertragungselement 6 angeordnet, insbesondere auf dieses gesteckt, und form- und/oder kraftschlüssig gehalten ist. Das Achssegment 5.4 ist als eine Abdeckung ausgebildet und bedeckt im dargestellten montierten Zustand des Sitzes 1 eine Mechanik des Betätigungsmechanismus 5.

Durch eine Betätigung des Hebelendes 5.2 wird die Sitzhöhenverstellung freigegeben und betätigt und durch eine Betätigung des anderen Hebelendes 5.3 wird die Lehnenneigungsverstellung freigegeben und betätigt oder umgekehrt.

Der gemeinsame Betätigungshebel 5.1 ist außen an einer Abdeckung 2.1 des Sitzteils 2 angeordnet, wobei die weiteren Komponenten des Betätigungsmechanismus 5 hinter der Abdeckung 2.1 und dem Achssegment 5.4 angeordnet sind.

Figur 2 zeigt schematisch in Seitenansicht einen Teil des Sitzes 1 mit abgenommener Abdeckung 2.1 für den Betätigungsmechanismus 5 und somit ohne Betätigungshebel 5.1 und ohne Achssegment 5.4.

Der Betätigungsmechanismus 5 ist hierbei mittels eines zugehörigen ersten Auslösemechanismus 7 für eine Sitzhöhenverstellung über ein Koppelelement 13, insbesondere eine Koppelstange, mit einem herkömmlichen Sitzhöhenversteller 14 fest verbunden. Durch diese Kopplung wird eine Betätigung am zugehörigen Hebelende 5.2 des Betätigungshebels 5.1 in eine Betätigung des Sitzhöhenverstellers 14 transformiert und entsprechend der Sitz 1 in seiner Höhe nach oben oder unten verstellt und nach der Betätigung fixiert.

Darüber hinaus ist der Betätigungsmechanismus 5 mittels eines zugehörigen zweiten Auslösemechanismus 8 für eine Lehnenneigungsverstellung über ein weiteres Koppelelement in Form eines Zugelements 15, insbesondere eines Zugstabs oder einer Zugfeder, mit einem herkömmlichen Lehnenneigungsversteller 16 fest verbunden. Durch diese Kopplung wird eine Betätigung am zugehörigen Hebelende 5.2 des Betätigungshebels 5.1 in eine Betätigung des Lehnenneigungsverstellers 16 transformiert und entsprechend das Lehnenteil 3 in seiner Neigung nach vorne oder hinten geneigt und somit verstellt und nach der Betätigung fixiert.

Figur 3 zeigt schematisch in perspektivischer Ansicht schräg von vorne den Sitz 1 mit abgenommener Abdeckung 2.1 und frei gezeigten inneren Komponenten des Betätigungsmechanismus 5. Insbesondere sind die Kopplungen des Betätigungsmechanismus 5 mit dem

Sitzhöhenversteller 14 und dem Lehnenneigungsversteller 16 mittels des Koppelelements 13 bzw. des Zugelements 15 deutlich gezeigt.

Das Koppelelement 13, insbesondere die Koppelstange, ist mit dem herkömmlichen Sitzhöhenversteller 14 fest oder starr verbunden.

Darüber hinaus ist der Betätigungsmechanismus 5 mittels des zugehörigen zweiten Auslösemechanismus 8 für die Lehnenneigungsverstellung über das weitere Koppelelement in Form des Zugelements 15 mit dem herkömmlichen Lehnenneigungsversteller 16 fest oder starr verbunden.

Figur 4 zeigt in Explosionsdarstellung ein Ausführungsbeispiel für einen Betätigungsmechanismus 5 ohne den äußeren Betätigungshebel 5.1 und somit die inneren Komponenten des Betätigungsmechanismus 5.

Der Betätigungsmechanismus 5 umfasst zumindest ein Übertragungselement 6, beispielsweise in Form einer Welle oder einer Übertragungsstange. Das Übertragungselement 6, insbesondere eines der Enden 6.1, ist in nicht näher dargestellter Art und Weise durch die Abdeckung 2.1 hindurch geführt. Auf diesem Ende 6.1 ist das Hebelende 5.3 des gemeinsamen Betätigungshebels 5.1 in nicht näher dargestellter Art und Weise angeordnet. Hierzu weisen das Ende 6.1 und das Hebelende 5.3 miteinander korrespondierende Profile auf, um zumindest eine formschlüssige Verbindung zu erzeugen. Beispielweise weist das Ende 6.1 in Axialrichtung einen sternförmigen Schaft auf, wobei das Hebelende 5.3 eine mit dem Schaft korrespondierende sternförmige Ausformung aufweist, so dass bei einem Aufstecken des Hebelendes 5.3 auf das als Schaft ausgebildete Ende 6.1 zumindest ein Formschluss erzeugt ist.

Weiterhin ist das Ende 6.1 als eine Aufnahme für das Hebelende 5.2 ausgebildet, insbesondere weist das Ende 6.1 ein Gewindeloch auf, in welches eine das Ende 6.1 und das Hebelende 5.2 verbindende Schraube angeordnet ist, wobei das Hebelende 5.2 drehbar an dem Ende 6.1 angeordnet ist.

Das andere Ende 6.2 des Übertragungselements 6 dient der Aufnahme der weiteren Komponenten des Betätigungsmechanismus 5, wobei diese axial hintereinander auf dem Übertragungselement 6 angeordnet sind. Dazu weist das Ende 6.2 einen ersten Schaft 6.2.1 und einen in seinem Durchmesser kleineren zweiten Schaft 6.2.2 auf.

Der erste Schaft 6.2.1 weist einen derartigen Durchmesser und in Axialrichtung eine derartige Länge auf, dass eine Anordnung von zumindest einem Lagerelement 11.1, dem ersten Auslösemechanismus 7 und einem ein Federelement 9 aufnehmenden Adapter 10 auf dem ersten Schaft 6.2.1 möglich ist. Das Lagerelement 11.1, der erste Auslösemechanismus 7 und der Adapter 10 weisen dazu mit dem Durchmesser des ersten Schafts 6.2.1 korrespondierende Ausformungen auf.

Der zweite Schaft 6.2.2 des Endes 6.2 weist einen gegenüber dem Durchmesser des ersten Schafts 6.2.1 geringeren Durchmesser auf und ist zur Aufnahme eines Anschlaghalters 12, eines weiteren Lagerelements 11.2 und des zweiten Auslösemechanismus 8 ausgebildet. Der Anschlaghalter 12, das Lagerelement 11.2 und der zweite Auslösemechanismus 8 weisen dazu mit dem Durchmesser des zweiten Schafts 6.2.2 korrespondierende Ausformungen auf.

Der zweite Auslösemechanismus 8 ist dabei drehfest an dem Übertragungselement 6 angeordnet. Hierzu weisen das Ende 6.2, insbesondere der zweite Schaft 6.2.2, und der zweite Auslösemechanismus 8 miteinander korrespondierende Profile auf, um eine zumindest formschlüssige Verbindung zu erzeugen. Beispielweise ist der zweite Schaft 6.2.2 in Axialrichtung sternförmig ausgebildet, wobei der zweite Auslösemechanismus 8 eine mit dem zweiten Schaft 6.2.2 korrespondierende sternförmige Ausformung aufweist, so dass bei einem Aufstecken des zweiten Auslösemechanismus 8 auf den zweiten Schaft 6.2.2 zumindest ein Formschluss erzeugt ist.

So koppelt das Übertragungselement 6 eines der Hebelenden 5.2 des Doppelhebels mit dem ersten Auslösemechanismus 7 für die Sitzhöhenverstellung und das andere Hebelende 5.3 des Doppelhebels mit dem zweiten Auslösemechanismus 8 für die Lehnenneigungsverstellung. In einer Ausgestaltung der Erfindung erfolgt diese Kopplung federbelastet.

Hierzu umfasst der Betätigungsmechanismus 5 das gemeinsame Federelement 9 für den ersten und den zweiten Auslösemechanismus 7 bzw. 8. Das gemeinsame Federelement 9 umfasst zwei Federenden 9.1, 9.2 und ist derart ausgebildet und zwischen dem ersten und zweiten Auslösemechanismus 7 und 8 angeordnet, dass beide Federenden 9.1 und 9.2 in Eingriff mit dem ersten Auslösemechanismus 7 für die Sitzhöhenverstellung kommen und eines der Federenden 9.1 direkt in Eingriff mit dem zweiten Auslösemechanismus 8 für die Lehnenneigungsverstellung kommt.

Die beiden Federenden 9.1 und 9.2 greifen dabei indirekt mittels Anordnung des Federelements 9 an dem Adapter 10 an dem Auslösemechanismus 7 ein.

Der Adapter 10 ist in Axialrichtung entlang der Querachse Y zwischen den beiden Auslösemechanismen 7 und 8 auf dem Übertragungselement 6 angeordnet. In Radialrichtung umfasst der Adapter 10 zwei elastische Arme 10.1, 10.2 oder Rippen, welche sicherstellen, dass beide Federenden 9.1 und 9.2 des gemeinsamen Federelements 9 stets im federbelasteten Eingriff sind mit dem ersten und/oder dem zweiten Auslösemechanismus 7 bzw. 8.

Darüber hinaus umfasst der Adapter 10 mehrere axial abstehende Enden10.3 bis 10.5 zur form- und/oder kraftschlüssigen Anordnung des Adapters 10 am ersten Auslösemechanismus 7. Die axial abstehenden Enden 10.3 bis 10.5 weisen hierzu endseitig eine Hakenform auf, die in Ausnehmungen des scheibenförmigen ersten Auslösemechanismus 7 rastend eingreifen.

Zur drehbaren Lagerung des Übertragungselements 6 umfasst der Betätigungsmechanismus 5 mindestens ein Lagerelement 11.1, 11.2, beispielsweise ein Gleitlager. Im dargestellten Ausführungsbeispiel sind zwei Lagerelemente 11.1, 11.2 vorgesehen, eines zur drehbaren Lagerung des Übertragungselements 6 im ersten Auslösemechanismus 7 und das andere zur drehbaren Lagerung des Übertragungselements 6 in dem Anschlaghalter 12.

Der Anschlaghalter 12 umfasst zumindest zwei radial und axial abstehende Anschläge 12.1 und 12.2, beispielsweise in Form von abgewinkelten Anschlagszungen, zur Begrenzung der Drehung des ersten Auslösemechanismus 7 bzw. des zweiten Auslösemechanismus 8. Dabei sind die Anschläge 12.1 und 12.2 derart radial beabstandet zueinander angeordnet, beispielsweise gegenüberliegend, dass eine zur Sitzhöhen- bzw. Lehnenneigungsverstellung ausreichende Drehung des ersten Auslösemechanismus 7 bzw. des zweiten Auslösemechanismus 8 sichergestellt ist.

Optional kann ein Abstützelement 17 zur Abstützung und Fixierung der Komponenten des Betätigungsmechanismus 5 vorgesehen sein. Dabei ist das Abstützelement 17 an einer Fahrzeugstruktur fest angeordnet und beispielsweise mittels einer Schraubverbindung mit dem Übertragungselement 6, insbesondere mit einem Innengewinde des Endes 6.2 des Übertragungselements 6, verbindbar. Das Übertragungselement 6 ist dabei drehbar an dem Abstützelement 17 angeordnet.

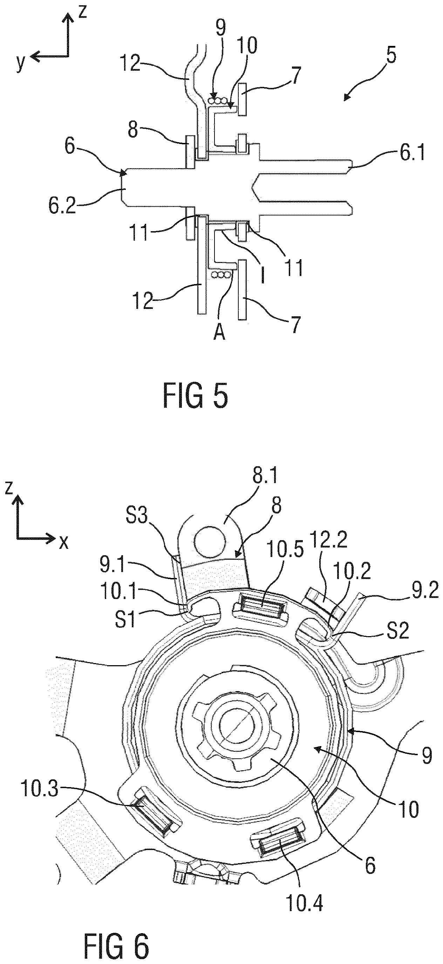

Figur 5 zeigt schematisch in Schnittdarstellung ein Ausführungsbeispiel für den Betätigungsmechanismus 5, wobei das Übertragungselement 6, insbesondere das Ende 6.2, hier als zentrale Aufnahme der Komponenten des Betätigungsmechanismus 5 zu erkennen ist.

Eine in dem Ende 6.1 des Übertragungselements 6 ausgebildete axiale Aussparung ist zur Aufnahme für das Hebelende 5.2 ausgebildet, insbesondere ist die Aussparung das in der Figur 4 beschriebene Gewindeloch, in welches die das Ende 6.1 und das Hebelende 5.2 verbindende Schraube angeordnet ist.

Der Schaft 6.2.1 des Endes 6.2 nimmt den ersten Auslösemechanismus 7 und den Adapter 10 auf, wobei der Adapter 10 eine U-Form mit axial abragender Innenwand I und Außenwand A aufweist. Der Adapter 10 liegt mit der Innenwand I auf dem Schaft 6.2.1 auf, wobei die Außenwand A das Federelement 9 aufnimmt. Der in seinem Durchmesser kleinere Schaft 6.2.2 ist zur Aufnahme des zweiten Auslösemechanismus 8 ausgebildet.

Figur 6 zeigt schematisch in Draufsicht ein Ausführungsbeispiel für den Betätigungsmechanismus 5 im zusammengebauten Zustand mit integriertem Auslösemechanismus 8 zur Lehnenneigungsverstellung und mit abgenommenen Auslösemechanismus 7 zur Sitzhöhenverstellung.

Wie anhand von Figur 6 gezeigt ist, ist das Federelement 9 zwischen drei Komponenten des Betätigungsmechanismus 5 federbelastet angeordnet, so dass das gemeinsame Federelement 9 für beide Auslösemechanismen 7 und 8 zur federbelasteten Verstellung, insbesondere Sitzhöhenverstellung und Lehnenneigungsverstellung, verwendet werden kann. Hierzu umfasst das Federelement 9 vier Kontaktstellen S1 bis S4.

So ist der erste Auslösemechanismus 7 zur Sitzhöhenverstellung, der fest, insbesondere rastend, mit dem Adapter 10 verbunden ist, über den Adapter 10 in zwei Richtungen an zwei Kontaktstellen S1 und S2 federbelastet mit dem Federelement 9 verbunden, so dass eine pumpenartige Sitzhöhenverstellung ermöglicht ist. Dazu sind die zwei elastischen Arme 10.1, 10.2 des Adapters 10 zwischen den beiden Federenden 9.1 und 9.2 des gemeinsamen Federelements 9 angeordnet und stets im federbelasteten Eingriff.

Der zweite Auslösemechanismus 8 zur Lehnenneigungsverstellung, insbesondere eine von dieser axial und radial abstehende Verlängerung 8.1, ist federbelastet an einer weiteren Kontaktstelle S3 mit dem gemeinsamen Federelement 9, insbesondere mit dessen Federende 9.1, nur in Entriegelungsrichtung des Lehnenneigungsverstellers 16 im Eingriff.

Der Anschlaghalter 12 ist über den von diesem axial und radial abstehenden Anschlag 12.2 an einer weiteren Kontaktstelle S4 federbelastet mit dem gemeinsamen Federelement 9 im Eingriff.

Durch eine solche Anordnung des gemeinsamen Federelements 9 zwischen den beiden Auslösemechanismen 7 und 8 und dem Anschlaghalter 12 mit vier Kontaktstellen S1 bis S4 wird sichergestellt, dass Toleranzen, insbesondere Fertigungs-, Montage- oder Bauteiltoleranzen, ausgeglichen werden, wobei beide Auslösemechanismen 7 und 8 und auch der Anschlaghalter 12 permanent in federbelasteten Kontakt mit dem gemeinsamen Federelement 9 stehen und somit ein Klappern oder Rasseln weitgehend vermieden ist.

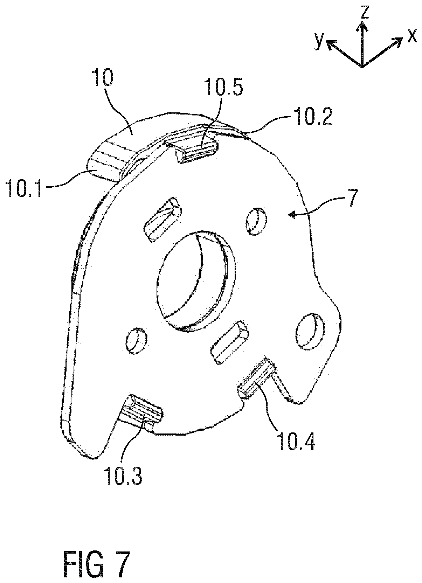

Figur 7 zeigt schematisch in perspektivischer Ansicht ein Ausführungsbeispiel für einen integrierten Auslösemechanismus 7 zur Sitzhöhenverstellung des Betätigungsmechanismus 5.

Dabei ist der Auslösemechanismus 7 zur Sitzhöhenverstellung rastend mit dem Adapter 10 oder Abstandshalter verbunden. Hierzu weist der Adapter 10 drei hakenförmige, abstehende Enden 10.3 bis 10.5 oder Rasthaken auf, welche in drei mit den Rasthaken korrespondierenden Ausnehmungen des scheibenförmigen ersten Auslösemechanismus 7 rastend eingreifen und zumindest eine formschlüssige Verbindung erzeugen. Die Ausnehmungen sind dabei radial am Rand des scheibenförmigen Auslösemechanismus 7 und beispielsweise symmetrisch verteilt angeordnet.

Die Aussparungen oder Löcher, welche um eine Achsöffnung für das Übertragungselement 6 angeordnet sind, dienen beispielsweise als Aufnahme oder Führungen des Hebels 5.2 zur Sitzhöhenverstellung.

### Bezugszeichenliste

- 1: Sitz
- 2: Sitzteil
- 2.1: Abdeckung
- 3: Lehnenteil
- 4: Längsführung
- 5: Betätigungsmechanismus
- 5.1: Betätigungshebel
- 5.2, 5.3: Hebel des Betätigungshebels
- 5.4: mittiges Achssegment
- 6: Übertragungselement
- 6.1, 6.2: Enden des Übertragungselements
- 6.2.1: Schaft (großer Durchmesser)
- 6.2.2: Schaft (kleiner Durchmesser)
- 7: erster Auslösemechanismus
- 8: zweiter Auslösemechanismus
- 8.1: Verlängerung
- 9: Federelement
- 9.1, 9.2: Federenden
- 10: Adapter
- 10.1, 10.2: elastische Arme
- 10.3 bis 10.5: abstehende Enden des Adapters
- 11.1, 11.2: Lagerelemente
- 12: Anschlaghalter
- 12.1, 12.2: Anschläge
- 13: Koppelelement
- 14: Sitzhöhenversteller
- 15: Zugelement
- 16: Lehnenneigungsversteller
- 17: Abstützelement
- A: Außenwand
- D: Drehachse
- I: Innenwand
- S1 bis S4: Kontaktstelle
- L: Längsrichtung
- H: Hochrichtung

- X: Längsachse
- Y: Querachse
- Z: Hochachse

## Patentansprüche

1. Betätigungsmechanismus (5) zur Verstellung eines Sitzes (1), umfassend einen zur Betätigung einer Sitzhöhenverstellung und einer Lehnenneigungsverstellung ausgestalteten Betätigungshebel (5.1), wobei
- der Betätigungshebel (5.1) als ein Doppelhebel zur Betätigung eines ersten Auslösemechanismus (7) für eine Sitzhöhenverstellung und zur Betätigung eines zweiten Auslösemechanismus (8) für eine Lehnenneigungsverstellung ausgebildet ist,
wobei der Betätigungsmechanismus ein Federelement umfasst, **dadurch gekennzeichnet, dass** das Federelement (9) mit dem ersten Auslösemechanismus (7) und dem zweiten Auslösemechanismus (8) zur Erzeugung einer Federbelastung auf den ersten und zweiten Auslösemechanismus (7, 8) gekoppelt ist.

2. Betätigungsmechanismus (5) nach Anspruch 1,
**dadurch gekennzeichnet, dass** ein Hebel (5.2) des Doppelhebels mit dem ersten Auslösemechanismus (7) für die Sitzhöhenverstellung und ein anderer Hebel (5.3) des Doppelhebels mit dem zweiten Auslösemechanismus (8) für die Lehnenneigungsverstellung koppelbar oder in Eingriff bringbar sind.

3. Betätigungsmechanismus (5) nach Anspruch 2,
**dadurch gekennzeichnet, dass** die zwei Hebel (5.2, 5.3) relativ zueinander beweglich um eine Rotationsachse eines Übertragungselements (6) an dem Übertragungselement (6) angeordnet sind.

4. Betätigungsmechanismus (5) nach Anspruch 3,
**dadurch gekennzeichnet, dass** der Hebel (5.2) zur Sitzhöhenverstellung drehbar an dem Übertragungselement (6) angeordnet ist.

5. Betätigungsmechanismus (5) nach Anspruch 3 oder 4,
**dadurch gekennzeichnet, dass** der Hebel (5.3) zur Lehnenneigungsverstellung drehfest an dem Übertragungselement (6) angeordnet ist.

6. Betätigungsmechanismus (5) nach einem der Ansprüche 3 bis 5,
**dadurch gekennzeichnet, dass** der erste Auslösemechanismus (7) und der zweite Auslösemechanismus (8) in Axialrichtung hintereinander an dem Übertragungselement (6) angeordnet sind.

7. Betätigungsmechanismus (5) nach einem der Ansprüche 3 bis 6,
**dadurch gekennzeichnet, dass** das Federelement (9) zwischen dem ersten Auslösemechanismus (7) und dem zweiten Auslösemechanismus (8) an dem Übertragungselement (6) angeordnet ist.

8. Betätigungsmechanismus (5) nach Anspruch 7, **dadurch gekennzeichnet, dass** das Federelement (9) zwei Federenden (9.1, 9.2) aufweist.

9. Betätigungsmechanismus (5) nach Anspruch 8,
**dadurch gekennzeichnet, dass** die Federenden (9.1, 9.2) derart ausgebildet sind, dass das eine Federende (9.1) in Eingriff mit dem ersten Auslösemechanismus (7) für die Sitzhöhenverstellung kommt und das andere Federende (9.2) in Eingriff mit dem zweiten Auslösemechanismus (8) für die Lehnenneigungsverstellung kommt oder umgekehrt.

10. Betätigungsmechanismus (5) nach einem der Ansprüche 2 bis 9, **dadurch gekennzeichnet, dass** ein Adapter (10) an dem ersten Auslösemechanismus (7) angeordnet ist.

11. Betätigungsmechanismus (5) nach Anspruch 10,
**dadurch gekennzeichnet, dass** der Adapter (10) in Axialrichtung zwischen den beiden Auslösemechanismen (7, 8) auf dem Übertragungselement (6) angeordnet ist.

12. Betätigungsmechanismus (5) nach Anspruch 10 oder 11,
**dadurch gekennzeichnet, dass** der Adapter (10) in Radialrichtung zwei zwischen den Federenden (9.1, 9.2) angeordnete elastische Arme (10.1, 10.2) aufweist.

13. Betätigungsmechanismus (5) nach einem der Ansprüche 3 bis 12,
**dadurch gekennzeichnet, dass** ein Anschlaghalter (12) an dem Übertragungselement (6) angeordnet ist.

14. Betätigungsmechanismus (5) nach Anspruch 13,
**dadurch gekennzeichnet, dass** der Anschlaghalter (12) zumindest zwei radial und axial abstehende Anschläge (12.1, 12.2) aufweist.

15. Fahrzeugsitz, umfassend einen Betätigungsmechanismus (5) nach einem der vorhergehenden Ansprüche.

## Claims

1. Actuating mechanism (5) for adjusting a seat (1), comprising an actuating lever (5.1) which is configured to actuate a seat height adjustment means and a backrest inclination adjustment means,
- the actuating lever (5.1) being configured as a double lever for actuating a first triggering mechanism (7) for a seat height adjustment means and for actuating a second triggering mechanism (8) for a backrest inclination adjustment means, the actuating mechanism comprising a spring element, **characterized in that** the spring element (9) is coupled to the first triggering mechanism (7) and the second triggering mechanism (8) in order to generate a spring load on the first and second triggering mechanism (7, 8).

2. Actuating mechanism (5) according to Claim 1, **characterized in that** a lever (5.2) of the double lever is couplable to or movable into engagement with the first triggering mechanism (7) for the seat height adjustment means, and another lever (5.3) of the double lever is coupled to or movable into engagement with the second triggering mechanism (8) for the backrest inclination adjustment means.

3. Actuating mechanism (5) according to Claim 2, **characterized in that** the two levers (5.2, 5.3) are arranged on a transmission element (6) such that they are movable relative to one another about a rotational axis of the transmission element (6).

4. Actuating mechanism (5) according to Claim 3, **characterized in that** the lever (5.2) for the seat height adjustment means is arranged rotatably on the transmission element (6).

5. Actuating mechanism (5) according to Claim 3 or 4,
**characterized in that** the lever (5.3) for the backrest inclination adjustment means is arranged fixedly on the transmission element (6) so as to rotate with it.

6. Actuating mechanism (5) according to one of Claims 3 to 5,
**characterized in that** the first triggering mechanism (7) and the second triggering mechanism (8) are arranged behind one another in the axial direction on the transmission element (6).

7. Actuating mechanism (5) according to one of Claims 3 to 6,
**characterized in that** the spring element (9) is arranged on the transmission element (6) between the first triggering mechanism (7) and the second triggering mechanism (8).

8. Actuating mechanism (5) according to Claim 7,
**characterized in that** the spring element (9) has two spring ends (9.1, 9.2).

9. Actuating mechanism (5) according to Claim 8,
**characterized in that** the spring ends (9.1, 9.2) are configured in such a way that the one spring end (9.1) comes into engagement with the first triggering mechanism (7) for the seat height adjustment means, and the other spring end (9.2) comes into engagement with the second triggering mechanism (8) for the backrest inclination adjustment means, or vice versa.

10. Actuating mechanism (5) according to one of Claims 2 to 9,
**characterized in that** an adapter (10) is arranged on the first triggering mechanism (7).

11. Actuating mechanism (5) according to Claim 10,
**characterized in that** the adapter (10) is arranged in the axial direction between the two triggering mechanisms (7, 8) on the transmission element (6).

12. Actuating mechanism (5) according to Claim 10 or 11,
**characterized in that**, in the radial direction, the adapter (10) has two elastic arms (10.1, 10.2) which are arranged between the spring ends (9.1, 9.2).

13. Actuating mechanism (5) according to one of Claims 3 to 12, **characterized in that** a stop holder (12) is arranged on the transmission element (6).

14. Actuating mechanism (5) according to Claim 13,
**characterized in that** the stop holder (12) has at least two radially and axially projecting stops (12.1, 12.2).

15. Vehicle seat, comprising an actuating mechanism (5) according to one of the preceding claims.

## Revendications

1. Mécanisme d'actionnement (5) pour régler un siège (1), comprenant un levier d'actionnement (5.1) configuré pour actionner un réglage de la hauteur du siège et un réglage de l'inclinaison du dossier,
- le levier d'actionnement (5.1) étant réalisé sous forme de double levier pour actionner un premier mécanisme de déclenchement (7) pour un réglage en hauteur du siège et pour actionner un deuxième mécanisme de déclenchement (8) pour un réglage de l'inclinaison du dossier,
le mécanisme d'actionnement comprenant un élément de ressort,
**caractérisé en ce que** l'élément de ressort (9) est accouplé au premier mécanisme de déclenchement (7) et au deuxième mécanisme de déclenchement (8) pour appliquer une sollicitation par ressort sur le premier et le deuxième mécanisme de déclenchement (7, 8).

2. Mécanisme d'actionnement (5) selon la revendication 1,
**caractérisé en ce qu'**un levier (5.2) du double levier peut être accouplé ou mis en prise avec le premier mécanisme de déclenchement (7) pour le réglage en hauteur du siège et un autre levier (5.3) du double levier peut être accouplé ou mis en prise avec le deuxième mécanisme de déclenchement (8) pour le réglage de l'inclinaison du dossier.

3. Mécanisme d'actionnement (5) selon la revendication 2,
**caractérisé en ce que** les deux leviers (5.2, 5.3) sont disposés sur un élément de transfert (6) de manière déplaçable l'un par rapport à l'autre autour d'un axe de rotation de l'élément de transfert (6).

4. Mécanisme d'actionnement (5) selon la revendication 3,
**caractérisé en ce que** le levier (5.2) pour le réglage en hauteur du siège est disposé de manière rotative sur l'élément de transfert (6).

5. Mécanisme d'actionnement (5) selon la revendication 3 ou 4,
**caractérisé en ce que** le levier (5.3) pour le réglage de l'inclinaison du dossier est disposé de manière solidaire en rotation sur l'élément de transfert (6).

6. Mécanisme d'actionnement (5) selon l'une quelconque des revendications 3 à 5, **caractérisé en ce que** le premier mécanisme de déclenchement (7) et le deuxième mécanisme de déclenchement (8) sont disposés l'un derrière l'autre en direction axiale sur l'élément de transfert (6).

7. Mécanisme d'actionnement (5) selon l'une quelconque des revendications 3 à 6,
**caractérisé en ce que** l'élément de ressort (9) est disposé entre le premier mécanisme de déclenchement (7) et le deuxième mécanisme de déclenchement (8) sur l'élément de transfert (6).

8. Mécanisme d'actionnement (5) selon la revendication 7,
**caractérisé en ce que** l'élément de ressort (9) présente deux extrémités de ressort (9.1, 9.2).

9. Mécanisme d'actionnement (5) selon la revendication 8,
**caractérisé en ce que** les extrémités de ressort (9.1, 9.2) sont réalisées de telle sorte que l'une des extrémités de ressort (9.1) vienne en prise avec le premier mécanisme de déclenchement (7) pour le réglage en hauteur du siège et l'autre extrémité de ressort (9.2) vienne en prise avec le deuxième mécanisme de déclenchement (8) pour le réglage de l'inclinaison du dossier, ou inversement.

10. Mécanisme d'actionnement (5) selon l'une quelconque des revendications 2 à 9,
**caractérisé en ce qu'**un adaptateur (10) est disposé sur le premier mécanisme de déclenchement (7).

11. Mécanisme d'actionnement (5) selon la revendication 10,
**caractérisé en ce que** l'adaptateur (10) est disposé dans la direction axiale entre les deux mécanismes de déclenchement (7, 8) sur l'élément de transfert (6).

12. Mécanisme d'actionnement (5) selon la revendication 10 ou 11,
**caractérisé en ce que** l'adaptateur (10) présente dans la direction radiale deux bras élastiques (10.1, 10.2) disposés entre les extrémités de ressort (9.1, 9.2).

13. Mécanisme d'actionnement (5) selon l'une quelconque des revendications 3 à 12,
**caractérisé en ce qu'**un élément de retenue de butée (12) est disposé sur l'élément de transfert (6).

14. Mécanisme d'actionnement (5) selon la revendication 13,
**caractérisé en ce que** l'élément de retenue de butée (12) présente au moins deux butées saillant radialement et axialement (12.1, 12.2).

15. Siège de véhicule comprenant un mécanisme d'actionnement (5) selon l'une quelconque des revendications précédentes.
